(19) Europäisches Patentamt
European Patent Office
Office européen des brevets

(11) Publication number: 0 068 671
B1

(12) **EUROPEAN PATENT SPECIFICATION**

(45) Date of publication of patent specification: **16.04.86**

(51) Int. Cl.$^4$: **C 08 L 83/08,** C 08 K 5/04, C 04 B 41/49, C 09 D 3/82

(21) Application number: **82302957.4**

(22) Date of filing: **08.06.82**

# (54) Siloxane compositions and process for treatment of materials

(30) Priority: **19.06.81 GB 8118974**

(43) Date of publication of application:
**05.01.83 Bulletin 83/01**

(45) Publication of the grant of the patent:
**16.04.86 Bulletin 86/16**

(84) Designated Contracting States:
**BE DE FR GB IT NL**

(56) References cited:
**CH-A- 583 152**
**DE-A-2 258 901**
**GB-A- 984 518**
**GB-A-1 154 766**
**GB-A-1 199 501**

(73) Proprietor: **Dow Corning Limited**
**Cardiff Road Barry**
**South Glamorgan CF6 7YL Wales (GB)**

(72) Inventor: **Clark, Peter John**
**Krabbenberg 2**
**B-1900 Overijse (BE)**
Inventor: **Whitfield, Neville Joseph**
**Krabbenberg 4**
**B-1900 Overijse (BE)**
Inventor: **Lucas, Stephen Kenneth**
**36 Drylla Southra Park Dinas Powis**
**South Glamorgan Wales (GB)**
Inventor: **Price, John Geoffrey Coombs**
**Sarny Maes-y-Coed Barry**
**South Glamorgan Wales (GB)**

(74) Representative: **Walbeoff, William John**
**Dow Corning Limited Cardiff Road Barry**
**South Glamorgan CF6 7YL Wales (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to novel siloxane compositions and to the treatment of materials therewith.

The use of organosilicon products for rendering masonry and other substrates hydrophobic has been known and commercially practiced for many years. In the case of masonry substrates the products most commonly employed are organosiloxane resins, usually in combination with catalysts and other additives. Although generally successful such products are normally supplied and employed as solutions in organic solvents. However, solvents are generally inflammable and have become relatively expensive. They also increasingly give rise to concern with regard to atmospheric pollution. There has therefore existed an increasing demand to reduce or replace entirely the known diluents with less hazardous and cheaper materials, whilst preserving the ability of the composition to penetrate porous substrates and render them hydrophobic.

Water-based materials in the form of the alkali metal siliconates have been available as masonry water repellents for many years. They are, however, strongly alkaline and the handling of such products presents certain problems. Moreover, the siliconates are not entirely suitable for certain applications. For example, when employed for the impregnation of brickwork for the purpose of forming a damp proof course therein, their slow cure rate means that they can be displaced from the injected region by high capillary flow. A further disadvantage is that the salts formed during curing of the siliconate can give rise to unsightly efflorescence on the masonry surface. It has also been proposed to provide water-based compositions containing organo-alkoxy silanes. However, such silanes are inflammable, relatively expensive, the aqueous solutions have to be prepared just prior to use and are suitable for treating only a limited range of substrates.

Compositions which exhibit hydrophobic characteristics on transparent surfaces, such as the windscreens of aircraft and motor vehicles, and which comprise (a) isopropanol (b) water and (c) a dimethylpolysiloxane containing polyaminoalkyl groups in which the amino groups have been neutralized by reaction with an acid, have been disclosed in British Patent 1,199,501. Compositions for treating surfaces to facilitate the release of ice and comprising (A) a polysiloxane having substituent polyaminoalkyl groups or (B) a monocarboxylic acid salt thereof, have been disclosed in British Patent 984,518.

According to the present invention there is provided a composition which comprises (A) a polydiorganosiloxane having a molecular weight of at least 350 and at least one silicon-bonded —OX group wherein X represents a hydrogen atom, and alkyl group or alkoxyalkyl group, said polydiorganosiloxane having at least one silicon-bonded substituent selected from aminoalkyl and polyaminoalkyl acid salt groups derived from a water-soluble organic or inorganic acid, the proportion of aminoalkyl and/or polyaminoalkyl acid salt substituents being sufficient to provide at least 0.5 percent by weight of amino nitrogen in the polydiorganosiloxane, at least 40 percent of the total silicon-bonded substituents in the polydiorganosiloxane being methyl groups and any remaining substituents being monovalent hydrocarbon groups having from 2 to 10 carbon atoms, (B) a silicon compound which is soluble in (C) and which has per molecule more than two silicon-bonded groups reactive with the —OX groups in (A) and (C) a water-soluble solvent for (A) selected from aliphatic alcohols, glycols, polyglycols and ethers and esters of glycols and polyglycols.

The present invention further relates to a process for treating a substrate, said process comprising applying the compositions of this invention to said substrate.

The polydiorganosiloxanes (A) employed in the compositions of this invention are linear or substantially linear polysiloxanes having at least one silicon-bonded —OX group, wherein X represents a hydrogen atom or an alkyl or alkoxyalkyl group, preferably having less than 6 carbon atoms. Examples of the operative X groups are methyl, ethyl, propyl, butyl and methoxyethyl. The OX groups may be present in terminal and/or non-terminal positions in the polysiloxane chain. The preferred polydiorganosiloxanes (A) are those which have OX groups attached to terminal silicon atoms.

At least 40 percent of the total organic groups present in the polydiorganosiloxane (A) are methyl groups.

The polydiorganosiloxane also has therein one or more silicon-bonded aminoalkyl and/or polyaminoalkyl acid salt groups which are derived from aminoalkyl and/or polyaminoalkyl groups and water-soluble organic or inorganic acids. The aminoalkyl and polyaminoalkyl groups from which the acid salt groups are derived are alkyl groups substituted with one or more primary, secondary or tertiary amino groups. Examples of such aminoalkyl and polyaminoalkyl groups are:
$—(CH_2)_3NH_2$, $—(CH_2)_4NHCH_3$, $—CH_2CH(CH_3)CH_2N(C_2H_5)_2$, $—(CH_2)_3NHCH_2CH_2NHCH_2CH_2NH_2$ and

$$—(CH_2)_3NHCH_2CH_2\underset{}{\overset{\displaystyle CH_2CH_2NH_2 \atop |}{C}}H(CH_2)_3NH_2,$$

the preferred groups being $—(CH_2)_3NH(CH_2)_2NH_2$ and $—CH_2CH(CH_3)CH_2NHCH_2CH_2NH_2$.

Sufficient of the aminoalkyl and/or polyaminoalkyl acid salt groups should be present to provide at least 0.5 percent by weight of amino nitrogen in the polydiorganosiloxane. From a cost aspect it is preferable to employ the minimum amino content consistent with the desired solubility of the

polydiorganosiloxane in water. It is therefore preferred that the amino nitrogen content does not exceed about 3.5 percent and most preferably falls within the range of from 0.75 to 2.5 percent by weight. Depending on the method of manufacture of the polydiorganosiloxanes the aminoalkyl or polyaminoalkyl acid salt groups may be present at the ends of the polysiloxane chains or in non-terminal positions or attached to both terminal and non-terminal silicon atoms.

Any silicon-bonded organic groups which may be present in the polydiorganosiloxane in addition to the specified methyl groups, aminoalkyl and polyaminoalkyl acid salt groups and OX groups are monovalent hydrocarbon groups having from 2 to 10 carbon atoms, such as alkyl, alkenyl, cycloalkyl, aryl, arylalkyl and alkaryl groups.

The molecular weight of the polydiorganosiloxane (A) should be at least 350 and preferably lies within the range from 800 to 4000. They can be prepared by reacting the appropriate aminoalkyl- or polyaminoalkyl-substituted polydiorganosiloxane with any water-soluble organic or inorganic acid.

The salt-forming acid may be mono-, di- or polybasic and examples of suitable salt-forming acids include hydrochloric, hydrobromic, sulfuric, nitric, boric, phosphoric, formic, propanoic, trichloroacetic, benzenesulphonic, succinic and oxalic acids. The salt groups are, however, preferably derived from the less corrosive acids, for example acetic acid.

The aminoalkyl- and/or polyaminoalkyl-substituted polydiorganosiloxanes employed in the formation of the acid salts can be prepared by known techniques, for example by reaction of a silanol-terminated polydiorganosiloxane free of amino-containing substituents with a silane such as $(CH_3)_n(XO)_{3-n}SiZ$, in which Z represents an aminoalkyl or polyaminoalkyl group, *n* is 0 or 1 and X is as defined hereinabove; by the polymerization of a cyclic siloxane in the presence of the said silane or by the copolymerization of aminoalkyl or polyaminoalkyl siloxanes with a polydiorganosiloxanes for example polydimethylsiloxanes.

As component (B) of the compositions of this invention there may be employed any organosilicon compound which is soluble in (C) and which has per molecule more than two silicon-bonded groups reactive with the —OX groups in (A). Such organosilicon compounds may be silanes or siloxanes having silanol groups or silicon-bonded hydrolyzable atoms or groups, for example chlorine atoms; alkoxy and alkoxyalkoxy groups e.g. methoxy, ethoxy, propoxy, methoxyethoxy and ethoxyethoxy; acyloxy e.g. acetoxy groups; and ketoximo groups.

In addition to the hydrolyzable atoms and groups the silanes and siloxanes may contain silicon-bonded monovalent hydrocarbon and substituted hydrocarbon groups, for example alkyl, alkenyl, aryl, haloalkyl, aminoalkyl, epoxyalkyl and mercaptoalkyl groups.

Preferred as component (B) are silanes of the general formula $RSiY_3$ wherein R represents an alkyl, alkenyl, aryl, alkoxy or alkoxyalkoxy group and each Y represents an alkoxy or alkoxyalkoxy group, R and Y each preferably having less than 7 carbon atoms, and partial hydrolyzates and condensates of such silanes. Illustrative of the preferred silanes and partial hydrolyzates are methyltrimethoxysilane, methyltriethoxysilane, vinyltrimethoxysilane, propyltrimethoxysilane, phenyltriethoxysilane, vinyltris(methoxyethoxy)silane, tetraethoxysilane and ethyl polysilicate.

The solvent component (C) of the compositions of this invention may be any water-soluble aliphatic alcohol, glycol, polyether glycol, ether or ester of a glycol or polyglycol or mixtures of these. The preferred solvent is isopropanol but other operative alcohols and glycols include methanol, ethanol, octanol, ethylene glycol, ethylene glycol monoethyl ether, ethylene glycol dimethyl ether, ethylene glycol monoethylether acetate and diethylene glycol dimethyl ether.

The compositions of this invention may be prepared by any convenient method. Preferably, a polydiorganosiloxane having aminoalkyl and/or polyaminoalkyl substituents is pre-reacted with the organic or inorganic acid and the resulting salt then mixed with components (B) and (C). According to an alternative procedure however, the salt can be formed *in-situ* by mixing a polydiorganosiloxane having aminoalkyl and/or polyaminoalkyl groups with (B), (C) and at least sufficient of the acid to provide the desired degree of salt group formation.

Component (B) may be employed in a wide range of proportions depending for example on the particular organosilicon compound used, and the rate of cure and degree of hardness desired in the product after application. For most applications it is preferred to use from about 1 to 75 percent by weight based on the weight of (A).

Sufficient of the solvent (C) should be present to provide a homogeneous composition having the desired storage stability. Although the proportion of (C) may vary widely, e.g. from 10 to 300 percent by weight based on the weight of (A), it is preferred to employ from about 50 to 200 percent by weight of (C) based on the weight of (A).

In addition to components (A), (B) and (C) the compositions of this invention preferably also contain some free acid. The acid may be incorporated by any convenient procedure, for example by the use of a stoichiometric excess of acid during the preparation of the salt, by separate addition or by addition in admixture of acid with the other components of the composition. We have found that the presence of the acid can prolong the useful working life of the compositions in the presence of water, for example when the compositions are diluted prior to use. The proportion of acid required to achieve the desired advantage may, depending on the nature of the acid and the diluted composition, vary from a trace to 10 percent or more by weight based on the weight of (A). For optimum results it is preferred to employ sufficient acid to

provide for a pH of not greater than 7 for the aqueous diluted composition. The excess acid, when employed, may be the same as the acid of the polydiorganosiloxane salt group or it may be different.

Mixtures of (A), (B) and (C) are relatively stable and can remain in a useable condition for at least several weeks. If desired, however, the storage life can be extended by dilution with water, preferably in an amount of from about 4 to about 200 percent by weight based on the weight of (A).

The compositions of this invention are film forming and are useful for forming protective and/or water repellent coatings on a variety of substrates, for example metal, wood, textile, leather, and ceramics. However, they are particularly suitable as aqueous-based water repellents for masonry, both siliceous and non-siliceous. They are miscible with water and may be diluted therewith for application to bricks, mortar, limestone and other masonry substrates, including particulate forms such as perlite and vermiculite, either for the *in-situ* formation of damp courses or as surface treatments. When employed as masonry water repellents the compositions are preferably diluted to provide a treating solution containing from about 2 to about 10 percent by weight total of (A) and (B).

If desired, catalysts may be included in the compositions of this invention to accelerate the curing thereof. The preferred catalysts are the water-miscible or water-dispersible metal organic compounds, for example triethanolamine titanate, octylene glycol titanate and diisopropoxy titanium di(acetoacetonate). The catalyst may be added either prior to or subsequent to the dilution of the composition with water and may be employed in amounts conventional for siloxane catalysis, preferably from 0.1 to 10 percent weight based on the combined weights of (A) and (B).

The following examples, in which the parts are expressed by weight, illustrate the invention.

Example 1

Octamethylcyclotetrasiloxane (150 g.) was added to a 500 ml. three necked glass flask together with N - (2 - aminoethyl) - 3 - aminopropyldimethoxymethyl silane (27.8 g.) and tetramethylammonium silanolate (22.0 g.). The flask was then heated to 100°C. for 2 hours and the silanolate catalyst then thermally decomposed by raising the temperature to about 150°C. for 30 minutes. The reaction mixture was then allowed to cool to 50°C. and glacial acetic acid (16.2 g.) added to form the amine acetate salt of the siloxane polymer ($\overline{Mn}$ approximately 1500). When cool the siloxane salt was mixed with isopropyl alcohol (150 g.) and methyl trimethoxysilane (10 g.) to give a clear solution having a viscosity of 8 cS. ($8.10^{-6}$ $m^2/s$) at 25°C.

One part of the solution prepared as described above was dissolved in water (9 parts) to provide an aqueous solution containing 5 percent by weight of the siloxane polymer salt. The solution was employed to treat Leicester Red clay bricks by immersion and the water repellent effect obtained tested according to BS 3826. The treated bricks conformed to the British Standard.

When the solution was injected into the brickwork of the wall of a house and allowed to cure an effective damp proof course was formed.

Example 2

Employing the method described in Example 1 octamethylcyclotetrasiloxane (150 g.), N - (2 - aminoethyl) - 3 - aminopropyldimethoxymethyl silane (13.9 g.), tetramethylammonium silanolate (11.0 g.) and glacial acetic acid (8.1 g.) were reacted together and an amine acetate siloxane salt having a $\overline{Mn}$ of approximately 3000 was obtained. Following the decomposition of the catalyst the salt was mixed thoroughly with isopropyl alcohol (150 g.) and methyltrimethoxy silane (10.0 g) and the resulting composition was a clear solution.

When the composition was diluted with water (5% by weight siloxane polymer salt) and tested according to BS 3826 the treated bricks met the specification.

Example 3

Octamethylcyclotetrasiloxane (150 g.) was added to a 500 ml. three necked flask with N - (2 - aminoethyl) - 3 - aminopropyldimethoxy methyl silane (20.9 g.) and tetramethylammonium silanolate (16.5 g.), and the mixture reacted as described in Example 1.

Following the decomposition of the catalyst the reaction mixture was allowed to cool to 50°C. and isopropyl alcohol (75 g). was added followed by concentrated hydrochloric acid (35% w/w; 21.2 g.). After further cooling to 20°C. more isopropanol (75 g.) was added to the siloxane salt together with methyltrimethoxysilane (10 g.). The resulting composition was a clear solution. When diluted with water in the ratio 9 parts water to one of solution a clear aqueous composition was obtained.

The $\overline{Mn}$ for the polydiorganosiloxane hydrochloride salt component was approximately 2,100.

Example 4

Octamethylcyclotetrasiloxane (150 g.), N - (2 - aminoethyl) - 3 - aminopropyldimethoxymethyl silane (52.2 g.) and tetramethylammonium silanolate (41.3 g.) were reacted and the silanolate catalyst was decomposed according to the procedure of Example 1. When the reaction mixture had cooled to 40°C. glacial acetic acid (38.0 g.) was added to form the amine acetate salt of the siloxane polymer ($\overline{Mn}$ of salt polymer was approximately 850). After further cooling to 22°C. there was added to the salt with mixing methyltrimethoxysilane (114 g.), isopropyl alcohol (340 g.) and water (38 g.) to give a clear solution.

When one part of the solution was diluted with 9 parts of water and tested as a masonry water repellent according to BS 3826 it passed the specification.

Example 5

The procedure of Example 1 was repeated to form the amine acetate salt of the siloxane polymer ($\overline{Mn}$ approximately 1500).

When the salt was mixed with methyltrimethoxysilane (10 g.) and ethyleneglycol monoethyl ether (150 g.) a clear solution was obtained which was miscible with water.

## Claims

1. A composition which comprises (A) a polydiorganosiloxane having a molecular weight of at least 350 and at least one silicon-bonded —OX group, wherein X represents a hydrogen atom, an alkyl group or an alkoxyalkyl group, the said polydiorganosiloxane having at least one silicon-bonded substituent selected from aminoalkyl and polyaminoalkyl acid salt groups derived from a water-soluble organic or inorganic acid, the proportion of aminoalkyl and/or polyaminoalkyl acid salt substituents being sufficient to provide at least 0.5 per cent by weight of amino nitrogen in the polydiorganosiloxane, at least 40 per cent of the total silicon-bonded substituents in the polydiorganosiloxane being methyl groups and any remaining substituents being monovalent hydrocarbon groups having from 2 to 10 carbon atoms, (B) a silicon compound which is soluble in (C) and which has per molecule more than two silicon-bonded groups reactive with the —OX groups in (A), and (C) a water-soluble solvent for (A) selected from aliphatic alcohols, glycols, polyglycols and ethers and esters of glycols and polyglycols.

2. A composition as claimed in Claim 1 wherein polydiorganosiloxane (A) has —OX groups bonded to terminal silicon atoms.

3. A composition as claimed in Claim 1 or Claim 2 wherein polydiorganosiloxane (A) has a molecular weight within the range from 800 to 4000.

4. A composition as claimed in any of the preceding claims wherein the polyaminoalkyl acid salt substituents are derived from $—(CH_2)_3NH(CH_2)_2NH_2$ and/or $—CH_2CH \cdot CH_3CH_2NHCH_2CH_2NH_2$ groups.

5. A composition as claimed in any one of the preceding claims which also comprises an organic or inorganic acid.

6. A composition as claimed in any of the preceding claims which comprises by weight 100 parts of the polydiorganosiloxane (A), from 1 to 75 parts of (B), and from 50 to 200 parts of (C).

7. A composition as claimed in any one of the preceding claims wherein (B) is selected from silanes of the general formula R Si $Y_3$, wherein R represents an alkyl, alkenyl aryl, alkoxy or alkoxyalkoxy group and each Y represents an alkoxy or alkoxyalkoxy group, R and Y each having less than 7 carbon atoms, and partial hydrolysates and condensates of such silanes.

8. A composition as claimed in any one of the preceding claims wherein (C) is isopropanol.

9. A composition as claimed in any one of the preceding claims which also comprises water.

10. A process for rendering a substrate hydrophobic which comprises applying thereto a composition as claimed in any one of the preceding claims.

11. A process as claimed in Claim 10 wherein the substrate is masonry.

## Patentansprüche

1. Zubereitung aus (A) einem Polydiorganosiloxan, das ein Molekulargewicht von wenigstens 350 hat und wenigstens eine siliciumgebundene Gruppe —OX aufweist, worin X ein Wasserstoffatom, eine Alkylgruppe oder eine Alkoxyalkylgruppe bedeutet, wobei dieses Polydiorganosiloxan wenigstens einen siliciumgebundenen Substituenten ausgewählt aus Aminoalkyl- und Polyaminoalkylsäuresalzgruppen enthält, die von einer wasserlöslichen organischen oder anorganischen Säure abgeleitet sind, der Anteil an Aminoalkyl- und/oder Polyaminoalkylsäuresalzsubstituenten so hoch ist, daß sich wenigstens 0,5 Gewichtsprozent an Aminostickstoff im Polydiorganosiloxan ergeben, wenigstens 40% der gesamten siliciumgebundenen Substituenten im Polydiorganosiloxan Methylgruppen sind und irgendwelche restliche Substituenten einwertige Kohlenwasserstoffgruppen mit 2 bis 10 Kohlenstoffatomen bedeuten, (B) einer Siliciumverbindung, die in der Komponente (C) löslich ist und pro Molekül mehr als zwei siliciumgebundene Gruppen aufweist, welche mit den Gruppen —OX in der Komponente (A) reagieren können, und (C) einem in Wasser löslichen Lösungsmittel für die Komponente (A) ausgewählt aus aliphatischen Alkoholen, Glykolen, Polyglykolen und Ethern sowie Estern von Glykolen und Polyglykolen.

2. Zubereitung nach Anspruch 1, dadurch gekennzeichnet, daß das Polydiorganosiloxan (A) Gruppen —OX aufweist, die an endständige Siliciumatome gebunden sind.

3. Zubereitung nach Anspruch 1 oder 2, dadurch gekennzeichnet, daß das Polydiorganosiloxan (A) ein Molekulargewicht im Bereich von 800 bis 4 000 hat.

4. Zubereitung nach einem der vorhergehenden Ansprüche, dadurch gekennzeichnet, daß die Polyaminoalkylsäuresalzsubstituenten abgeleitet sind von den Gruppen $—(CH_2)_3NH(CH_2)_2NH_2$ und/oder $—CH_2CH \cdot CH_3CH_2NHCH_2CH_2NH_2$.

5. Zubereitung nach einem der vorhergehenden Ansprüche, dadurch gekennzeichnet, daß sie ferner eine organische oder anorganische Säure enthält.

6. Zubereitung nach einem der vorhergehenden Ansprüche, dadurch gekennzeichnet, daß sie auf 100 Gewichtsteile des Polydiorganosiloxans (A) 1 bis 75 Gewichtsteile der Komponente (B) und 50 bis 200 Gewichtsteile der Komponente (C) enthält.

7. Zubereitung nach einem der vorhergehenden Ansprüche, dadurch gekennzeichnet, daß die Komponente (B) ausgewählt ist aus Silanen der allgemeinen Formel $RSiY_3$, worin R eine Alkylgruppe, Alkenylgruppe, Arylgruppe, Alkoxygruppe oder Alkoxyalkoxygruppe bedeutet und jeder der Substituenten Y für eine Alkoxygruppe oder eine Alkoxyalkoxygruppe steht, wobei R und Y jeweils weniger als 7 Kohlenstoffatome enthalten, und Teilhydrolysaten sowie Kondensaten solcher Silane.

8. Zubereitung nach einem der vorhergehenden Ansprüche, dadurch gekennzeichnet, daß die Komponente (C) Isopropanol ist.

9. Zubereitung nach einem der vorhergehenden Ansprüche, dadurch gekennzeichnet, daß sie ferner Wasser enthält.

10. Verfahren zur Hydrophobierung eines Trägers, dadurch gekennzeichnet, daß man einen solchen Träger mit einer Zubereitung nach einem der vorhergehenden Ansprüche behandelt.

11. Verfahren nach Anspruch 10, dadurch gekennzeichnet, daß der Träger Mauerwerk ist.

**Revendications**

1. Une composition qui comprend (A) un polydiorganosiloxane ayant un poids moléculaire d'au moins 350 et au moins un groupe —OX lié au silicium, où X est un atome d'hydrogène, un groupe alkyle ou un groupe alcoxyalkyle, ce polydiorganosiloxane ayant au moins un substituant lié au silicium choisi parmi les groupes sels d'acides aminoalkylés et polyaminoalkylés dérivés d'un acide organique ou minéral soluble dans l'eau, la proportion des substituants sels d'acides aminoalkylés et/ou polyaminoalkylés étant suffisante pour donner au moins 0,5 pour cent en poids d'azote d'amino dans le polydiorganosiloxane, au moins 40% du total des substituants liés au silicium dans le polydiorganosiloxane étant des groupes méthyle et tous les substituants restants étant des groupes hydrocarbonés monovalents ayant de 2 à 10 atomes de carbone, (B) un composé de silicium qui est soluble dans (C) et qui a, par molécule, plus de deux groupes liés au silicium et réactifs avec les groupes —OX dans (A), et (C) un solvant soluble dans l'eau pour (A) choisi parmi les alcools, les glycols, les polyglycols et les éthers et esters de glycols et polyglycols aliphatiques.

2. Une composition selon la revendication 1, dans laquelle le polydiorganosiloxane (A) a des groupes —OX liés à des atomes de silicium terminaux.

3. Une composition selon la revendication 1 ou 2, dans laquelle le polydiorganosiloxane (A) a un poids moléculaire dans la gamme de 800 à 4000.

4. Une composition selon l'une quelconque des revendications précédentes, dans laquelle les substituants sels d'acides polyaminoalkylés dérivent de groupes $-(CH_2)_3NH(CH_2)_2NH_2$ et/ou $-CH_2CH \cdot CH_3CH_2NHCH_2CH_2NH_2$.

5. Une composition selon l'une quelconque des revendications précédentes, qui comprend aussi un acide organique ou minéral.

6. Une composition selon l'une quelconque des revendications précédentes, qui comprend, en poids, 100 parties du polydiorganosiloxane (A), de 1 à 75 parties de (B), et de 50 à 200 parties de (C).

7. Une composition selon l'une quelconque des revendications précédentes, dans laquelle (B) est choisi parmi les silanes de la formule générale $RSiY_3$, où R est un groupe alkyle, alcényle, aryle, alcoxy ou alcoxyalcoxy et chaque Y est un groupe alcoxy ou alcoxyalcoxy, R et Y ayant chacun moins de 7 atomes de carbone, et les hydrolysats et condensats partiels de tels silanes.

8. Une composition selon l'une quelconque des revendications précédentes, dans laquelle (C) est l'isopropanol.

9. Une composition selon l'une quelconque des revendications précédentes, qui comprend aussi de l'eau.

10. Un procédé pour rendre hydrophobe un substrat, qui consiste à lui appliquer une composition telle que revendiquée dans l'une quelconque des revendications précédentes.

11. Un procédé selon la revendication 10, dans lequel le substrat est une maçonnerie.